# EUROPÄISCHE PATENTANMELDUNG

(11) **EP 2 740 588 A1**
(43) Veröffentlichungstag der Anmeldung: **11.06.2014**
(21) Anmeldenummer: 12195554.6
(22) Anmeldetag: 04.12.2012
(51) Int. Cl.: B32B 3/30

(54) **Sandwichbauteil, Karosserieteil eines Kraftfahrzeugs und Verfahren zur Herstellung eines Sandwichbauteils**

(71) Anmelder: Magna Steyr Fahrzeugtechnik AG & Co KG, 8041 Graz (AT)
(72) Erfinder: Dietz, Wolfgang, 8081 Pirching (AT); Krammer, Christoph, 8530 Deutschlandsberg (AT); Wolfsberger, Günter, 8501 Lieboch (AT)
(74) Vertreter: Rausch, Gabriele

(57) **Zusammenfassung**

Sandwichbauteil mit einer Kernschicht (1) zwischen einer ersten Deckschicht (2) und einer zweiten Deckschicht (3), wobei die Kernschicht (1) in einem an die erste Deckschicht (2) angrenzenden ersten Bereich (4) eine zur ersten Deckschicht (2) hin offene Struktur aufweist und in einem an die zweite Deckschicht (3) angrenzenden, dem ersten Bereich (4) gegenüberliegenden, zweiten Bereich (5) eine zur zweiten Deckschicht (3) hin geschlossene Form aufweist.

## Beschreibung

### Gebiet der Erfindung

Die vorliegende Erfindung betrifft ein Sandwichbauteil mit einer Kernschicht zwischen einer ersten Deckschicht und einer zweiten Deckschicht. Weiters betrifft die Erfindung ein Karosserieteil eines Kraftfahrzeugs das zumindest in einem ersten Abschnitt durch ein erfindungsgemäßes Sandwichbauteil gebildet ist. Weiters betrifft die Erfindung ein Verfahren zur Herstellung eines erfindungsgemäßen Sandwichbauteils.

### Stand der Technik

Derartige Sandwichbauteile finden in verschiedenen Bereichen der Technik Anwendung, beispielsweise im Fahrzeugbau. Die Sandwichbauteile setzen sich aus zwei Deckschichten, als äußere Schichten des Aufbaus und einer Kernschicht zusammen. Für die Kernschicht ist die Verwendung von strukturierten Kernen, wie Wabenkernen, als auch von homogenen Materialien, wie beispielsweise aufgeschäumter Werkstoffe, bekannt. Mit Hilfe derartiger Sandwichbauteile wird versucht Material und Gewicht einzusparen und dennoch eine hohe Belastbarkeit des Bauteils zu erreichen.

Beispielsweise offenbart die EP 1 758 733 A1 Sandwichelemente umfassend mindestens zwei Decklagen und mindestens eine zwischen den Deckschichten angeordnete Mittellage, mit verschiedenen Kernaufbauten. Die DE 10 2011 109 468 A1 offenbart eine Fronthaube für einen Personenkraftwagen, mit einer Struktur aus zwei voneinander beabstandeten Deckschichten, zwischen welchen wenigstens ein Kernelement angeordnet ist.

### Zusammenfassung der Erfindung

Es ist eine Aufgabe der Erfindung, Sandwichbauteile der genannten Art zu verbessern und insbesondere ein Sandwichbauteil anzugeben, das hinsichtlich Gewicht und Steifigkeit optimiert ist und dessen Eigenschaften einfach anpassbar sind.

Weiters ist es eine Aufgabe der Erfindung ein verbessertes Karosserieteil eines Kraftfahrzeugs anzugeben und ein Verfahren zur Herstellung eines Sandwichbauteils.

Die Lösung der Aufgabe erfolgt durch ein Sandwichbauteil mit einer Kernschicht zwischen einer ersten Deckschicht und einer zweiten Deckschicht, wobei die Kernschicht in einem an die erste Deckschicht angrenzenden ersten Bereich eine zur ersten Deckschicht hin offene Struktur aufweist und in einem an die zweite Deckschicht angrenzenden, dem ersten Bereich gegenüberliegenden, zweiten Bereich eine zur zweiten Deckschicht hin geschlossene Form aufweist.

Die Lösung der Aufgabe erfolgt auch durch ein Karosserieteil eines Kraftfahrzeugs, wobei ein erster Abschnitt des Karosserieteils durch ein erfindungsgemäßes Sandwichbauteil gebildet ist.

Die Lösung er Aufgabe erfolgt auch durch ein Verfahren zur Herstellung eines erfindungsgemäßen Sandwichbauteils, wobei die Kernschicht durch

Einbringen eines Kernschicht-Materials in eine Press-, Spritz- oder Schäumform geformt wird.

Erfindungsgemäß ist vorgesehen, dass die Kernschicht eines Sandwichbauteils in einem ersten Bereich des Kerns eine offene Struktur aufweist. Offene Struktur heißt erfindungsgemäß, dass die Kernschicht in diesem Bereich aus Stegen gebildete Formen ausbildet, wobei die Formen bevorzugt aus sich regelmäßige wiederholenden Zellen, beispielsweise in Waben- und/oder runder und/oder ovaler Form und/oder in geometrisch regelmäßiger und/oder unregelmäßiger Form, und/oder durch sonstige strukturierte Anordnungen der Stege gebildet sind, wobei die Stege zur angrenzenden Deckschicht hin weisen, also im Wesentlichen normal auf die Deckschicht ausgerichtet sind und im Bereich der Deckschicht enden. Die erste Deckschicht liegt, auf Grund der Strukturausbildung der Kernschicht, so auf der Kernschicht auf, dass zwischen erster Deckschicht und Kernschicht Hohlräume gleicher und/oder unterschiedlicher Größe gebildet werden.

In einem zweiten Bereich des Kerns weist die Kernschicht eine zur zweiten Deckschicht hin geschlossene Form auf. Im Gegensatz zum ersten Bereich weist das Kernmaterial an der gegenüberliegenden zweiten Seite eine geschlossene Form auf, bildet also in diesem zweiten Bereich keine zur zweiten Deckschicht hin offenen Stege aus, sondern bildet ein homogenes Vollmaterial.

Durch die Ausbildung von zwei unterschiedlichen Bereichen in der Kernschicht des Sandwichbauteils ist es möglich die Eigenschaften des Bauteiles, beispielsweise betreffend Gewicht, Steifigkeit, Crash-Performance, optische Anforderungen, Akustik und Wärmeabsorbtion, in großem Maß anzupassen. Parameter, wie die Dicke der beiden Bereiche oder die Geometrie der Strukturen, können auch lokal an jeweilige Erfordernisse angepasst werden, so dass das selbe Sandwichbauteil beispielsweise Zonen mit unterschiedlichen Eigenschaften aufweisen kann.

Ein weiterer Vorteil eines erfindungsgemäßen Sandwichbauteils besteht darin, dass die Kernschicht im zweiten Bereich eine zur zweiten Deckschicht hin geschlossene Form aufweist und somit Bauteilwelligkeiten an dieser Seite des Sandwichbauteils vermieden werden.

Der Aufbau und die Herstellung der Deckschichten ist einfach, da die gewünschten Eigenschaften des Sandwichbauteils allein durch die Gestaltung bzw. Variation der Kernschicht bestimmt werden können.

Weiterbildungen der Erfindung sind in den abhängigen Ansprüchen, der Beschreibung sowie den beigefügten Zeichnungen angegeben.

Bevorzugt ist die Kernschicht einteilig ausgebildet, so dass der erste und der zweite Bereich aus dem selben Material gebildet sind.

In einer anderen Ausgestaltung der Erfindung ist die Kernschicht mehrteilig ausgebildet, insbesondere aus unterschiedlichen Materialien. Dadurch sind die Eigenschaften der Kernschicht und des ganzen Bauteils individuell an die Erfordernisse anpassbar.

Besonders bevorzugt ist die Kernschicht als Schaumelement ausgebildet. Das Material des Schaumelements umfasst vorzugsweise Polyurethan (PUR-Schaum). Vorteilhaft können alle Materialien eingesetzt werden, die flüssig expandierend, einspritzbar oder gießbar sind, beispielsweise Polyethylenterephthalat (PET).

Bevorzugt weist die Kernschicht im ersten Bereich eine Struktur aus sich regelmäßig wiederholenden Zellen auf, beispielsweise eine Wabenstruktur. Besonders bevorzugt kann die Struktur sechseckige Waben aufweisen. Die Struktur kann polygonförmige Waben aufweisen, aber auch zur ersten Deckschicht hin offene Kreise oder ovale Formen ausbilden oder eine Wellenform aufweisen.

Im zweiten Bereich ist die Kernschicht vorzugsweise ein homogenes Vollmaterial und weist daher keine geometrisch geformte Struktur auf. Das Vollmaterial kann natürlich porös sein, also zum Beispiel ein fester Schaum mit oder ohne Hohlräumen sein.

Bevorzugt weist die Kernschicht im zweiten Bereich eine glatte Oberfläche zur zweiten Deckschicht hin auf. Durch die ebene, glatte Oberfläche der Kernschicht wird eine sichtbare Welligkeit, die auch durch eine angrenzende Deckschicht hindurch erscheinen kann, vermieden.

Auch die erste und die zweite Decksicht sind bevorzugt im Wesentlichen eben ausgebildet. Die Deckschichten sind somit bevorzugt flächige Elemente, die sich über die Kernschicht eben erstrecken und nicht in Hohlräume der Kernschicht hineinreichen.

Die Oberfläche der ersten Decksicht kann geschlossen aber auch teilweise offen ausgeführt sein. Die bevorzugt untere, erste Deckschicht wird für gewöhnlich geschlossen ausgeführt, sodass die Kernschicht vollständig verschlossen ist. Zur Reduktion von Geräuschen kann es vorteilhaft sein, vor allem die durch die geformte Kernschicht entstehenden Hohlräume nach unten zu öffnen, das heißt die untere Deckschicht löchrig zu gestalten, um das Bauteil akustisch zu verbessern.

In einer Ausführungsform kann der Verlauf der ersten Decksicht der Struktur der Kernschicht im ersten Bereich angenähert sein. Dabei bleiben zwischen Kernschicht und erster Deckschicht Hohlräume bestehen, da bei völliger Anschmiegung der Deckschicht an die Kernschicht die Vorteile einer üblichen strukturierten Kernschicht, wie Beispielsweise einer Wabenstruktur, verloren gehen und zusätzlich der Herstellungsprozess verkompliziert wird.

Gemäß einer Ausgestaltung der Erfindung sind in der Kernschicht sphärische Beimischungsbestandteile, mit vom umgebenden Material der Kernschicht verschiedenen physikalischen und/oder chemischen Eigenschaften angeordnet. Bei den sphärischen Beimischungsbestandteilen kann es sich um Vollkugeln oder auch um Holkugeln, beispielsweise um Kapseln, handeln, die beispielsweise aus einem anderen Material als die umgebende Kernschicht gebildet sind. Die Beimischungsbestandteile können alle ungefähr den selben Durchmesser aufweisen oder auch unterschiedliche Durchmesser. Durch Einbringen unterschiedlicher sphärischer Beimischungsbestandteile, beispielsweise mit unterschiedlichen Radien, können gezielt, beispielsweise auch lokal, die Eigenschaften des Sandwichbauteils variiert werden.

Gemäß einer Ausgestaltung der Erfindung sind in der Kernschicht Füllmaterialien, wie beispielsweise Fasern, mit vom umgebenden Material der Kernschicht verschiedenen physikalischen und/oder chemischen Eigenschaften angeordnet.

Erfindungsgemäß kann auch ein Karosserieteil eines Kraftfahrzeugs, zumindest in einem ersten Abschnitt des Karosserieteils, durch einen erfindungsgemäßen Sandwichbauteil gebildet sein. Das Karosserieteil kann insbesondere die Fronthaube eines Kraftfahrzeuges sein, aber auch beispielsweise ein Fahrzeugdach, eine Heckklappe, ein Seitenteil oder ein Bodenelement.

Bevorzugt kann ein zweiter Abschnitt des Karosserieteils ebenfalls durch einen erfindungsgemäßen Sandwichbauteil gebildet sein, wobei es sich um einen weiteren, zusätzlichen Sandwichbauteil oder auch um den selben Sandwichbauteil des ersten Abschnitts des Karosserieteils handeln kann. Der erste Bereich des ersten Abschnitts des Karosserieteils kann eine vom ersten Bereich des zweiten Abschnitts des Karosserieteils verschiedene Struktur aufweisen, insbesondere verschiedene Zellenform, verschiedene Zellenbreite, verschiedene Zellenhöhe, verschiedene Stegbreite und/oder verschiedenes Material, beispielsweise verschiedene Materialdichte oder verschiedene Zusätze enthalten. Hierdurch kann das Karosserieteil in verschiedenen Abschnitten verschiedene Eigenschaften aufweisen. Beispielsweise kann eine entsprechende Fronthaube eines Kraftfahrzeuges lokale Bereiche mit geringerer Steifigkeit aufweisen, so dass die Fronthaube in diesen Bereichen die erforderliche Verformbarkeit für einen verbesserten Fußgängerschutz aufweist.

Ein Verfahren zur Herstellung eines erfindungsgemäßen Sandwichbauteils kann den Verfahrensschritt umfassen, dass die Kernschicht durch Einbringen eines Kernschicht-Materials in eine Press-, Spritz- oder Schäumform geformt wird. Dabei können in einem einzigen Werkzeug und in einem einzigen Verfahrensschritt auch Kernschichten mit Abschnitten unterschiedlicher Eigenschaften geformt werden, beispielsweise mit unterschiedlich dicken ersten und zweiten Bereichen.

Bevorzugt werden die Deckschichten mit oder nach der Formung der Kernschicht mit der Kernschicht gefügt, beispielsweise verklebt oder gleich direkt im Herstellungsprozess der Kernschicht, während sowohl Deck- aus auch Kernschichten in einem noch nicht ausgehärteten Zustand sind, vernetzt. Die noch weichen Teile werden vorzugsweise übereinander gelegt und verbinden sich dadurch.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines Schnitts durch einen erfindungsgemäßen Sandwichbauteil in Seitenansicht.
- Fig. 2: ist eine schematische Darstellung eines Schnitts durch einen weiteren erfindungsgemäßen Sandwichbauteil in Seitenansicht.
- Fig. 3: ist eine schematische Darstellung eines Schnitts durch einen weiteren erfindungsgemäßen Sandwichbauteil in Seitenansicht.
- Fig. 4: ist eine schematische Darstellung eines Schnitts durch einen weiteren erfindungsgemäßen Sandwichbauteil in Seitenansicht.
- Fig. 5: ist eine schematische Darstellung einer Struktur einer erfindungsgemäßen Kernschicht in Draufsicht von unten, von der ersten Deckschicht her.
- Fig. 6: ist eine schematische Darstellung einer weiteren Struktur einer erfindungsgemäßen Kernschicht in Draufsicht von unten, von der ersten Deckschicht her.
- Fig. 7: ist eine schematische Darstellung einer weiteren Struktur einer erfindungsgemäßen Kernschicht in Draufsicht von unten, von der ersten Deckschicht her.
- Fig. 8: ist eine schematische Darstellung eines Schnitts durch ein erfindungsgemäßes Sandwichbauteil entsprechend A-A der Fig. 7.

### Detaillierte Beschreibung der Erfindung

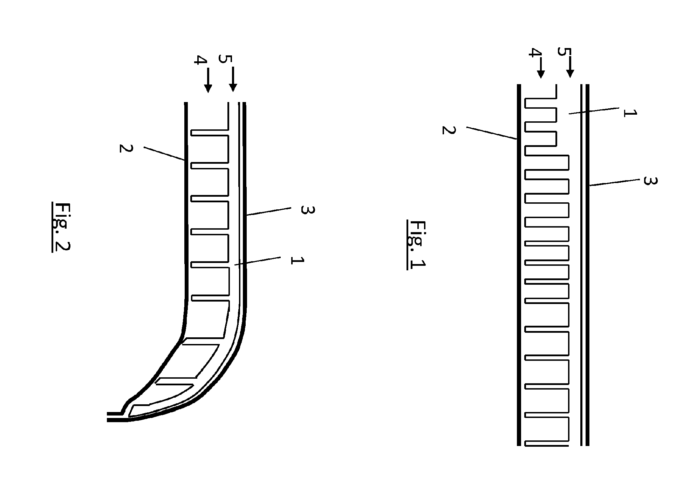

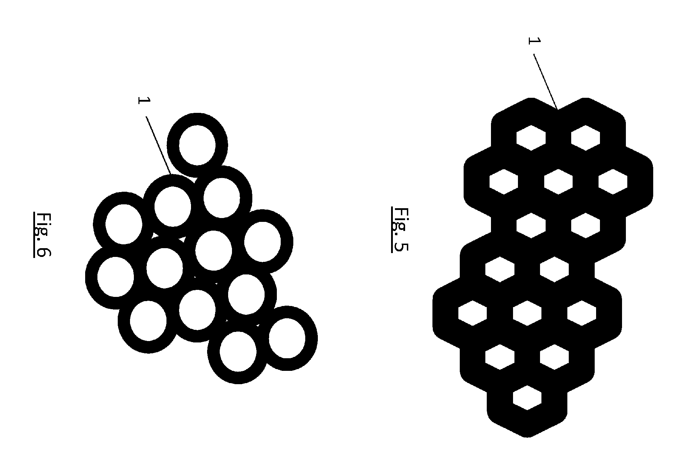

In den Fig. 1-4 sind erfindungsgemäße Sandwichbauteile in seitlichen Schnitten dargestellt. So stellt Fig. 1 ein planes Sandwichbauteil oder einen planen Abschnitt eines Sandwichbauteils dar, mit einer Kernschicht 1, einer ersten Decksicht 2 und einer zweiten Deckschicht 3. Zur ersten Deckschicht 2 hin weist die Kernschicht 1 in einem ersten Abschnitt 4 eine aus Stegen gebildete Struktur auf, die zur ersten Deckschicht 2 hin offen ist. Ansichten von unten, von der ersten Deckschicht 2 aus, auf einige der möglichen Strukturen sind in den Fig. 5 bis 7 abgebildet. Zur zweiten Deckschicht 3 hin weist die Kernschicht 1 keine Strukturen auf, sondern bildet einen zur Deckschicht 3 hin geschlossenen Körper.

Die erste Decksicht (2) kann geschlossen oder teilweise offen ausgeführt sein.

Fig. 2 zeigt einen ähnlichen Aufbau eines erfindungsgemäßen Sandwichbauteils wie Fig. 1, jedoch ist der Bauteil über alle Schichten hinweg an einer Seite gekrümmt ausgeführt. Es kann sich dabei zum Beispiel um einen vorderen Bereich einer Fronthaube eines Kraftfahrzeuges handeln.

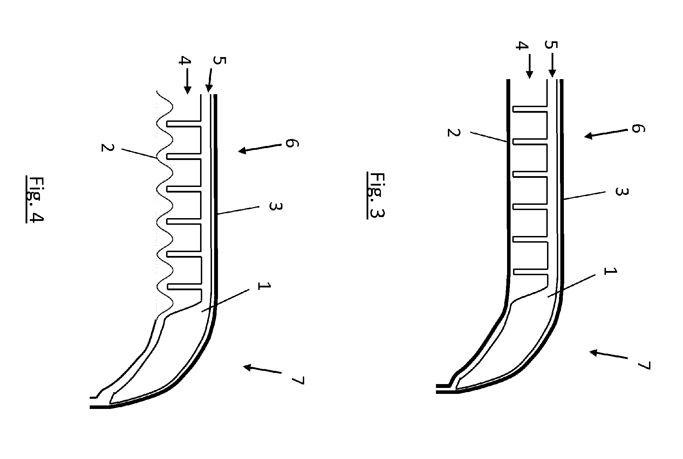

Das in Fig. 3 dargestellte Sandwichbauteil entspricht dem Bauteil der Fig. 2, wobei das Bauteil jedoch zwei unterschiedliche Abschnitte aufweist. In einem ersten Abschnitt 6 ist ein erster Bereich 4 mit Stegen die eine offene Struktur bilden stark ausgebildet. In einem zweiten Abschnitt 7 ist hingegen ein erster, strukturierter Bereich 4 kaum oder gar nicht vorhanden. Stattdessen erstreckt sich der zweite Bereich 5, in welchem die Kernschicht 1 als geschlossenes Vollmaterial ausgeführt ist, über die gesamte Dicke der Kernschicht 1.

Der in Fig. 4 dargestellte Bauteil entspricht dem Bauteil gem. Fig. 3, jedoch ist der Verlauf der ersten Decksicht 2 der Struktur der Kernschicht 1 im ersten Bereich 4 angenähert, und nicht völlig eben ausgeführt wie in Fig. 3.

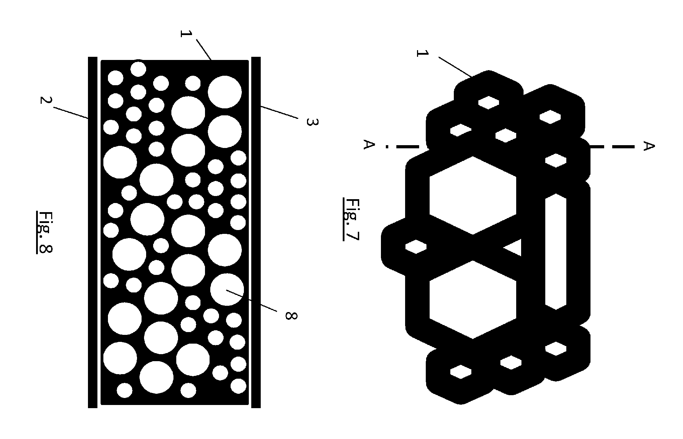

Fig. 5 stellt schematisch eine Struktur einer erfindungsgemäßen Kernschicht 1 zur ersten Deckschicht 2 hin dar. Die Kernschicht 1 bildet im sichtbaren ersten Bereich 4 eine Wabenstruktur aus. Entsprechend zeigen die Fig. 6 eine kreisförmige bzw. zylindrische Struktur der Stege und Fig. 7 eine weniger symmetrische Struktur aus Waben unterschiedlicher Größe und Form.

In Fig. 8 ist ein Schnitt durch einen Sandwichbauteil dargestellt. In die Kernschicht 1, die zwischen den Deckschichten 2 und 3 angeordnet ist, sind sphärische Beimischungsbestandteile 8 mit unterschiedlicher Größe eingebettet, beispielsweise PUR-Schaumkugeln oder Schaumhohlkugeln oder Glaskugeln oder andere Füllmaterialien, welche die Eigenschaften des Kernmaterials und somit des gesamten Bauteils verändern. Dadurch dass die Kernschicht 1 in einer Press-, Spritz- oder Schäumform ausgehärtet wurde, befinden sich die sphärischen Beimischungsbestandteile 8 durchwegs im Inneren der Kernschicht 1, sodass die Oberfläche der Kernschicht 1 weitgehend unversehrt und eben bleibt.

Insgesamt kann insbesondere der strukturierte erste Bereich 4 der Kernschicht 1 verschiedenste Zellenformen, Zellenbreiten, Zellenhöhen und/oder Stegbreiten aufweisen und/oder aus verschiedenen Materialien mit unterschiedlichen Zusätzen aufgebaut sein und/oder unterschiedlich dick in Relation zum zweiten Bereich 5 ausgebildet sein.

Die Erfindung gibt somit in allen Ausführungsformen ein Sandwichbauteil an, das hinsichtlich Gewicht und Steifigkeit optimiert ist und dessen Eigenschaften einfach anpassbar sind.

### Bezugszeichenliste

- 1: Kernschicht
- 2: erste Deckschicht
- 3: zweite Deckschicht
- 4: erster Bereich der Kernschicht
- 5: zweiter Bereich der Kernschicht
- 6: erster Abschnitt des Karosserieteils
- 7: zweiter Abschnitt des Karosserieteils
- 8: sphärische Beimischungsbestandteile

## Patentansprüche

1. Sandwichbauteil mit einer Kernschicht (1) zwischen einer ersten Deckschicht (2) und einer zweiten Deckschicht (3),
**dadurch gekennzeichnet, dass** die Kernschicht (1) in einem an die erste Deckschicht (2) angrenzenden ersten Bereich (4) eine zur ersten Deckschicht (2) hin offene Struktur aufweist und in einem an die zweite Deckschicht (3) angrenzenden, dem ersten Bereich (4) gegenüberliegenden, zweiten Bereich (5) eine zur zweiten Deckschicht (3) hin geschlossene Form aufweist.

2. Sandwichbauteil nach Anspruch 1,
**dadurch gekennzeichnet, dass** die Kernschicht (1) einteilig ausgebildet ist, so dass der erste und der zweite Bereich (4, 5) aus dem selben Material gebildet sind.

3. Sandwichbauteil nach Anspruch 1,
**dadurch gekennzeichnet, dass** die Kernschicht (1) mehrteilig ausgebildet ist, insbesondere aus unterschiedlichen Materialien.

4. Sandwichbauteil nach zumindest einem der vorhergehenden Ansprüche,
**dadurch gekennzeichnet, dass** die Kernschicht (1) als Schaumelement ausgebildet ist, insbesondere ein Polyurethan ist.

5. Sandwichbauteil nach zumindest einem der vorhergehenden Ansprüche,
**dadurch gekennzeichnet, dass** die Kernschicht (1) im ersten Bereich (4) eine Struktur aus sich regelmäßig wiederholenden Zellen aufweist, beispielsweise eine Wabenstruktur und/oder runde und/oder ovale Zellen.

6. Sandwichbauteil nach zumindest einem der vorhergehenden Ansprüche,
**dadurch gekennzeichnet, dass** die Kernschicht (1) im zweiten Bereich (5) ein homogenes Vollmaterial ist.

7. Sandwichbauteil nach zumindest einem der vorhergehenden Ansprüche,
**dadurch gekennzeichnet, dass** die Kernschicht (1) im zweiten Bereich (5) eine glatte Oberfläche zur zweiten Deckschicht (3) hin aufweist.

8. Sandwichbauteil nach zumindest einem der vorhergehenden Ansprüche,
**dadurch gekennzeichnet, dass** die Oberfläche der ersten Decksicht (2) geschlossen oder teilweise offen ausgeführt ist.

9. Sandwichbauteil nach zumindest einem der vorhergehenden Ansprüche,
**dadurch gekennzeichnet, dass** die erste und die zweite Decksicht (2, 3) im Wesentlichen eben ausgebildet sind.

10. Sandwichbauteil nach zumindest einem der Ansprüche 1 bis 8,
**dadurch gekennzeichnet, dass** der Verlauf der ersten Decksicht (2) der Struktur der Kernschicht (1) im ersten Bereich (4) angenähert ist.

11. Sandwichbauteil nach zumindest einem der vorhergehenden Ansprüche,
**dadurch gekennzeichnet , dass** in der Kernschicht (1) sphärische Beimischungsbestandteile (8), mit vom umgebenden Material der Kernschicht (1) verschiedenen physikalischen und/oder chemischen Eigenschaften angeordnet sind.

12. Karosserieteil eines Kraftfahrzeugs,
**dadurch gekennzeichnet, dass** ein erster Abschnitt (6) des Karosserieteils durch einen Sandwichbauteil nach zumindest einem der vorhergehenden Ansprüche gebildet ist.

13. Karosserieteil eines Kraftfahrzeugs nach Anspruch 12,
**dadurch gekennzeichnet , dass** ein zweiter Abschnitt (7) des Karosserieteils durch einen Sandwichbauteil nach zumindest einem der vorhergehenden Ansprüche gebildet ist, wobei der erste Bereich (4) des ersten Abschnitts des Karosserieteils eine vom ersten Bereich (4) des zweiten Abschnitts des Karosserieteils verschiedene Struktur aufweist, insbesondere verschiedene Zellenform, verschiedene Zellenbreite, verschiedene Zellenhöhe, verschiedene Stegbreite und/oder verschiedenes Material.

14. Verfahren zur Herstellung eines Sandwichbauteils nach zumindest einem der Ansprüche 1 bis 11,
**dadurch gekennzeichnet, dass** die Kernschicht (1) durch Einbringen eines Kernschicht-Materials in eine Press-, Spritz- oder Schäumform geformt wird.

15. Verfahren nach Anspruch 14,
**dadurch gekennzeichnet, dass** die Deckschichten (2, 3) mit oder nach der Formung der Kernschicht (1) mit der Kernschicht (1) gefügt werden.
